# EUROPEAN PATENT APPLICATION

(11) **EP 2 468 089 A1**
(43) Date of publication of application: **27.06.2012**
(21) Application number: 11188702.2
(22) Date of filing: 10.11.2011
(51) Int. Cl.: A01G 17/06

(54) **Support post assembly, particularly for agricultural applications**

(30) Priority: 21.12.2010 IT MI20102342
(71) Applicant: Gelsa S.r.l., 27020, Borgo san Siro (Pavia) (IT)
(72) Inventor: Travini, Vittorio, 2720 BORGO SAN SIRO (PAVIA) (IT)
(74) Representative: Petruzziello, Aldo

(57) **Abstract**

The present disclosure relates to a support post assembly (10) for agricultural applications, comprising a post (12; 120) provided with first coupler means (18) for respective wires (4, 5). The post assembly comprises, moreover, at least one crosspiece (20) fixed on the post (12) and provided with second coupler means (23) for respective wires (4). Said at least one crosspiece (20) comprises an upper surface (21) and a pair of side walls (22) extending downwards from said upper surface (21) and said second coupler means (23) comprise cavities (23) shaped like an upside-down L and formed at end portions of said side walls (22), the cavities (23) formed on a side wall (22) facing the respective cavities (23) formed on the other side wall (22). A support structure (100) for agricultural applications comprising a plurality of the aforesaid support post assemblies (10) is also disclosed.

## Description

The present invention relates, in general, to a support post assembly for agricultural applications. More particularly the invention relates to a post assembly suitable for supporting vine plants or another kind of fruit plant.

Herein below in the present description specific reference will be made to the support of vine shoots, it being understood that what is said also applies to the support of branches of any fruit tree.

The need is known, in a row of a vineyard, for the support of the vine shoots as they grow so as to keep them raised from the ground, in this way encouraging proper growth of the grape bunches.

For this purpose the provision is known, along the row, of a support structure which typically comprises a line of vertical posts, preferably in steel, between which wires are stretched to support the vine shoots during germination, preferably in stainless or zinc-plated steel.

More particularly the vertical posts comprise head posts, provided with resistant and deep anchorages, and a plurality of intermediate posts, appropriately distanced along the line. The support wires comprise a load-bearing wire, stretched along the posts at a height from the ground of approximately 1 metre, and one or more wires placed above the load-bearing wire and appropriately distanced one from the other.

The known support structures defined above have, however, some disadvantages.

In the first place, during germination, the vine shoots have to be appropriately restrained, typically tied, to the wires and this in order to encourage a proper growth of the grape bunches. This operation of tying takes time and therefore increases the costs of management of the vineyard.

Secondarily the wires are associated to the posts by means of coupler members carried on at least one side of each post. The coupler members often do not have such structural rigidity as to withstand the impact and shaking arising from the operations of harvesting, so that they tend to bend, often becoming unusable.

FR 2670081 A3 describes a support structure for training vines, comprising a metal upright equipped with receiving housings for bearing wires and equipped with receiving means for means of fixing crosspieces intended to support the wires for retaining the vine plants along a row.

FR 2939278 describes a vine stake for fixing horizontal metal wires having a branch on which a strip is formed by a punching process through forming an opening in the branch. A weakening zone is defined in a side edge of the strip in a manner that an axis of the strip is deviated with respect to an axis of an opening towards one side where a zone is defined.

The object of the present invention is therefore that of solving the problems mentioned above by making available a support post assembly for agricultural applications, particularly for vineyards, shaped in such a way as to allow the coupling of wires distanced one from the other both vertically, i.e. in the direction of development of the post, and horizontally, i.e. crosswise to the post, so as to create a sort of network for containing the vine shoots that are germinating. In this way the operation of tying of the vine shoots to the wires is avoided, which, as mentioned previously, is burdensome both in terms of time and in terms of costs.

Another object of the present invention is that of providing a support post assembly which has coupler means for the wires, shaped in such a way that they allow rapid and resistant coupling of the wires.

Yet another object of the invention is that of making available a support post assembly of simple manufacture and which can be obtained at competitive production costs. Last but not least an object of the invention is that of providing a support structure for agricultural applications comprising a plurality of support post assemblies of the type defined above.

These and other objects, which will be made clearer herein below, are achieved in accordance with the invention with the features listed in the annexed independent claims 1 and 9.

Further advantageous features of the invention form the object of the dependent claims.

According to a first aspect the invention therefore provides a support post assembly for agricultural applications, comprising a post provided with coupler means for respective wires. The support post assembly is characterised in that it comprises, moreover, at least one crosspiece fixed on the post, which has second coupler means for respective wires.

According to a further aspect, the invention provides a support structure for agricultural applications comprising a pair of head posts, means for anchoring each head post to the ground and a plurality of wires for supporting vine shoots or branches that are germinating. The support structure is characterised in that it comprises, between the head posts, at least one support post assembly as defined above, the plurality of wires being stretched, vertically and horizontally, between the head posts and the at least one support post assembly thereby forming a containing frame for the vine shoots or branches that are germinating.

The features of the invention will be made clearer by the following detailed description referred to its embodiments purely by way of a non-limiting example, illustrated in the accompanying drawings, in which:
Figure 1 is a perspective view of a support structure for agricultural applications according to the invention;
Figure 1a is an enlarged view of the detail circled in Figure 1;
Figure 1b is an enlarged view of the detail circled in Figure 1;
Figure 2 is a perspective view of a support post assembly according to the invention;
Figure 2a is an enlarged view of the detail circled in Figure 2;
Figure 3 is a perspective view of a first embodiment of a post of the support post assembly of the invention;
Figure 3a is an enlarged view of the detail circled in Figure 3;
Figure 4 is a partial side view of the post of Figure 3;
Figure 5 is a view from above of the post of Figure 4;
Figure 6 is a perspective view of a second embodiment of a post of the support post assembly of the invention;
Figure 6a is an enlarged view of the detail circled in Figure 6;
Figure 7 is a partial side view of the post of Figure 6;
Figure 8 is a view from above of the post of Figure 7;
Figure 9 is a perspective view of a crosspiece of the support post assembly of the invention;
Figure 10 is a partial front view of the crosspiece of Figure 9;
Figure 11 is a side view of the crosspiece of Figure 10;
Figure 12 is a perspective view of an auxiliary support post, to be used in combination with the support1 post assemblies of the invention to form a support structure; and Figure 12a is an enlarged view of the detail circled in Figure 12.

In the drawings listed above identical or similar elements are denoted by the same reference numerals.

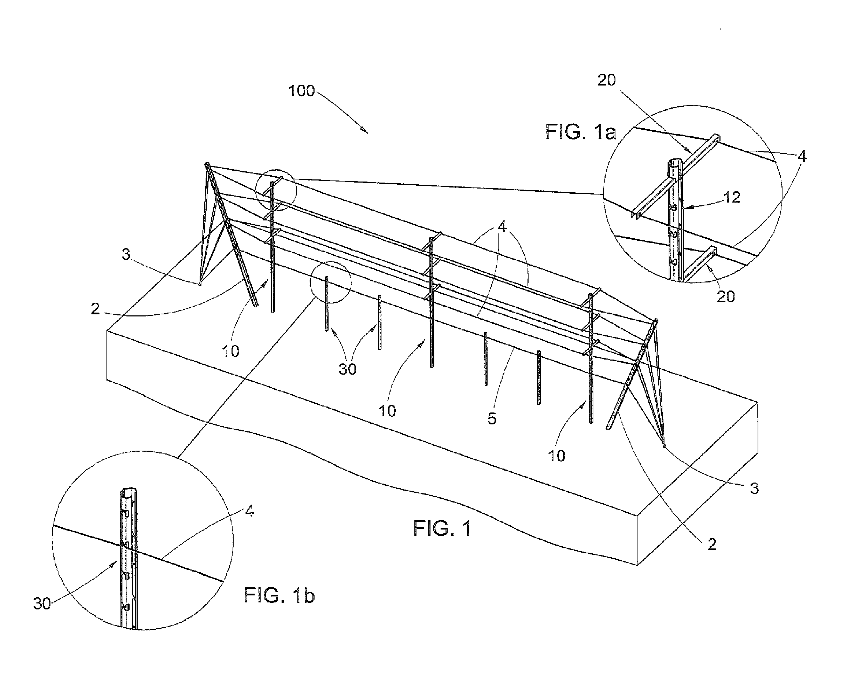

Referring to Figures 1, 1a and 1b, a support structure of the invention is illustrated therein, particularly for vine plants, denoted in general by reference numeral 100.

The support structure 100 comprises a pair of head posts 2, preferably in stainless steel or zinc-plated steel, each one suitable for being planted in the ground T and provided with means of anchorage 3 to the ground T.

Between the head posts 2 at least one support post assembly according to the invention is placed, denoted in general by the reference numeral 10, in the example illustrated three support post assemblies 10, also suitable for being planted in the ground T.

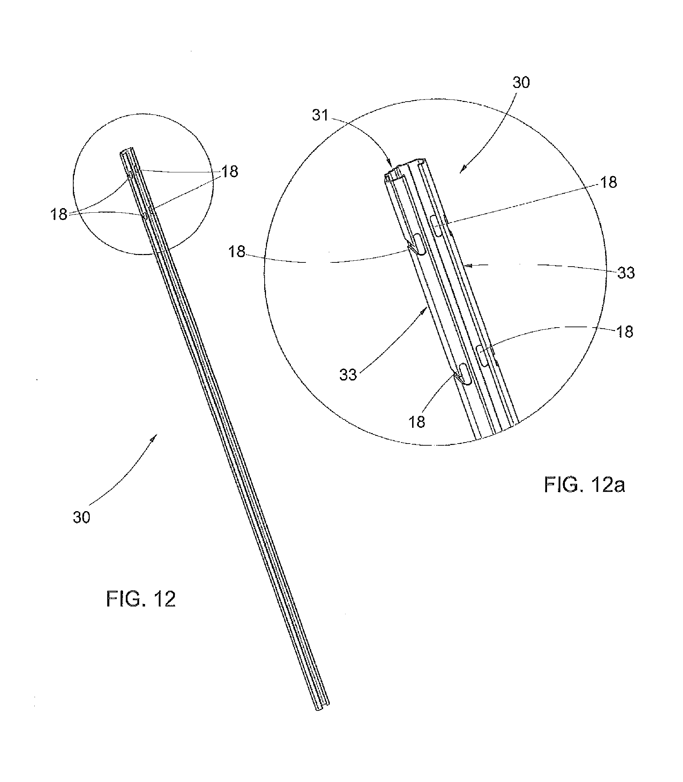

Preferably, between one support post assembly 10 and the next, there is at least one auxiliary support post 30, described in detail further on with reference to Figures 12 and 12a.

Between the head posts 2, the support post assemblies 10 and, optionally, the auxiliary support posts 30, a plurality of wires are stretched, also preferably in stainless steel or zinc-plated steel, suitable for supporting the vine shoots, or the branches of fruit plants, during their germination.

In particular the wires comprise a load-bearing wire 5, stretched along the posts at a height from the ground of approximately 1 metre, and one or more wires 4, having, typically, a smaller section compared to that of the load-bearing wire 5, placed above the load-bearing wire and appropriately distanced one from the other, both vertically and horizontally.

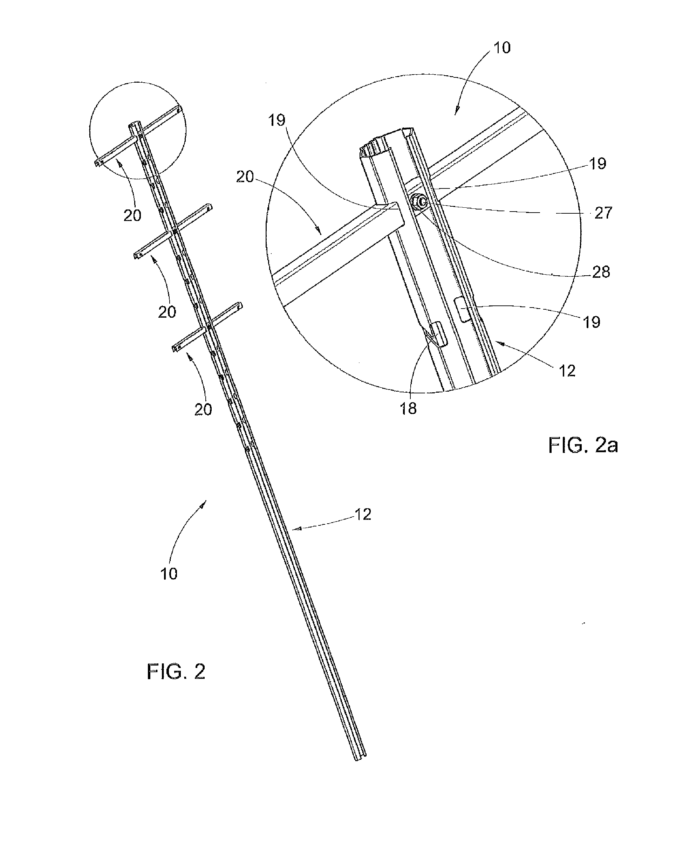

Referring to Figures 2 and 2a, each support post assembly 10 comprises a post 12 and at least one crosspiece 20 fixed on the post 12, in the embodiment illustrated three crosspieces 20.

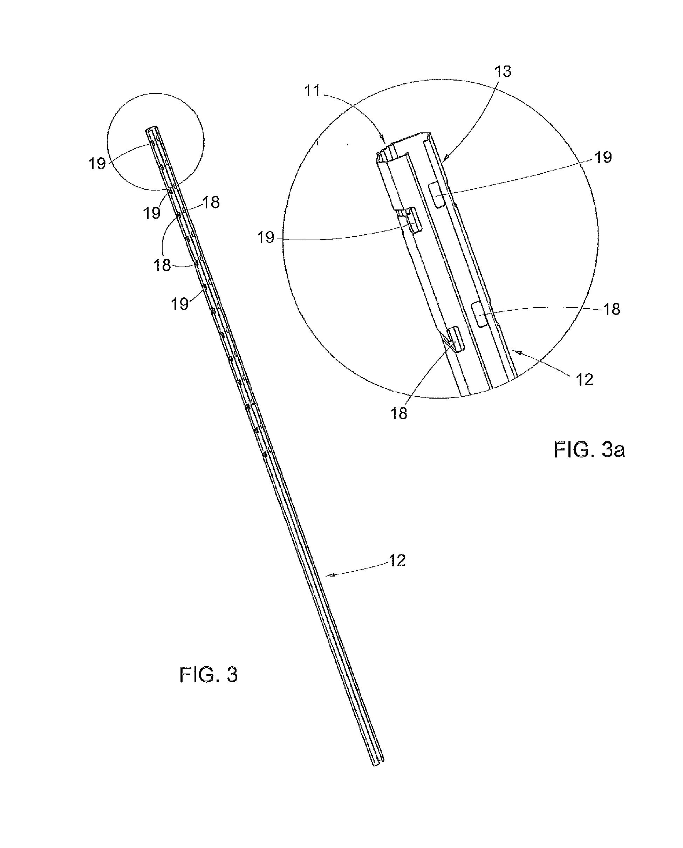

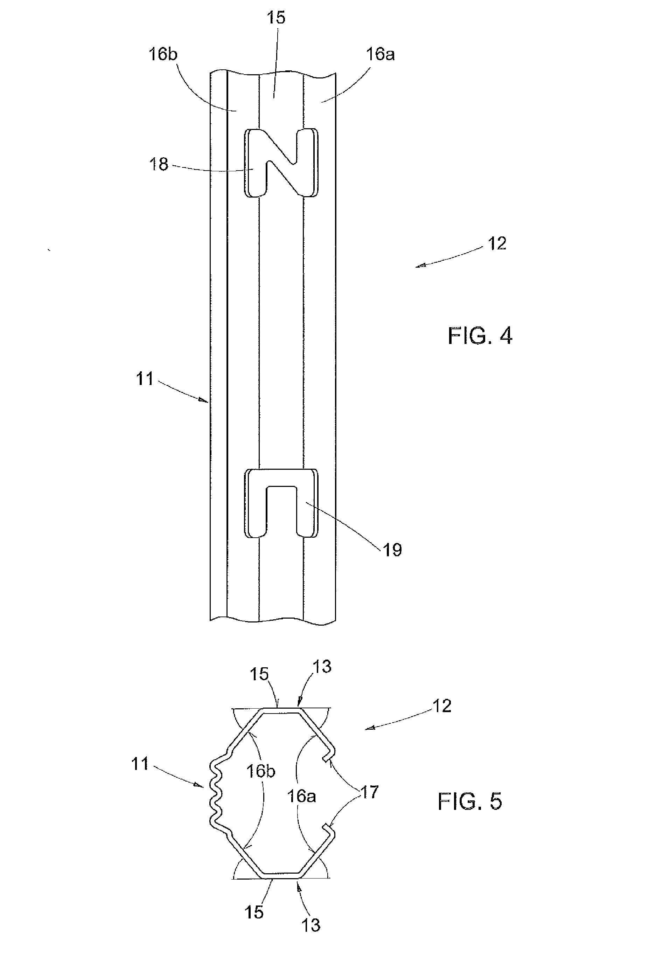

As shown in greater detail in Figures 3 to 5, according to its first embodiment the post 12 is obtained by bending of a metal sheet so as to obtain a tubular piece open on one side.

In particular the post 12 comprises a back portion 11, wherefrom sides 13 extend, each one provided with a respective end lip 17. The back portion 11 is preferably corrugated so as to increase the rigidity of the post 12.

Each side 13 preferably has a central section 15, substantially flat, wherefrom extend a first section 16a for connection to the back portion 11, preferably bent along an angle α of 45° in relation to the plane of the central section 15, and a second section 16b, also bent along an angle α of 45° in relation to the plane of fhe central section 15, and ending with the lip 17.

Preferably, at the sides 13, first coupler means 18 are formed for respective support wires 4, 5, The coupler means are preferably made up of pairs of facing cavities 18 with an N shape, arranged along the length of the post 12, preferably at its upper half.

In use a wire 4, 5 is inserted, with a simple and rapid manual operation, in each cavity of the pair of facing N-shaped cavities 18. Given the particular configuration of the cavities 18, the wire 4, 5, once inserted in their interior, remains coupled to the post 12 in a stable manner, thereby simplifying considerably the time of installation of the support structure and the costs of management of the vineyard.

At the sides 13 the post 12 has, moreover, means 19 for housing and blocking in position the at least one crosspiece 20. These means of housing and blocking in position are preferably made up of pairs of facing cavities 19 with an unside-down U shape, arranged along the length of the post 12, alternated with the pairs of N-shaped cavities 18.

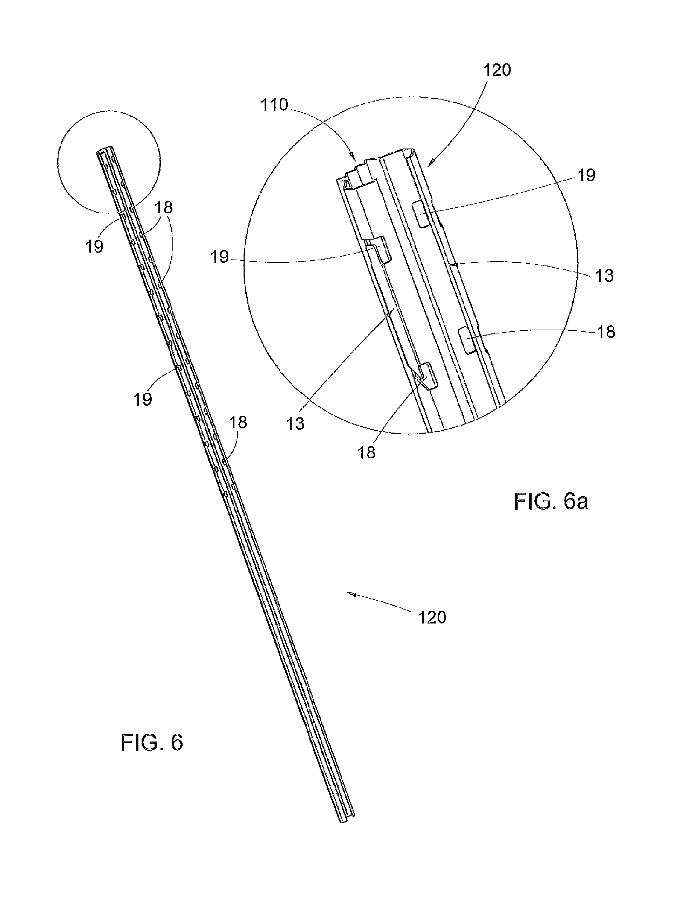

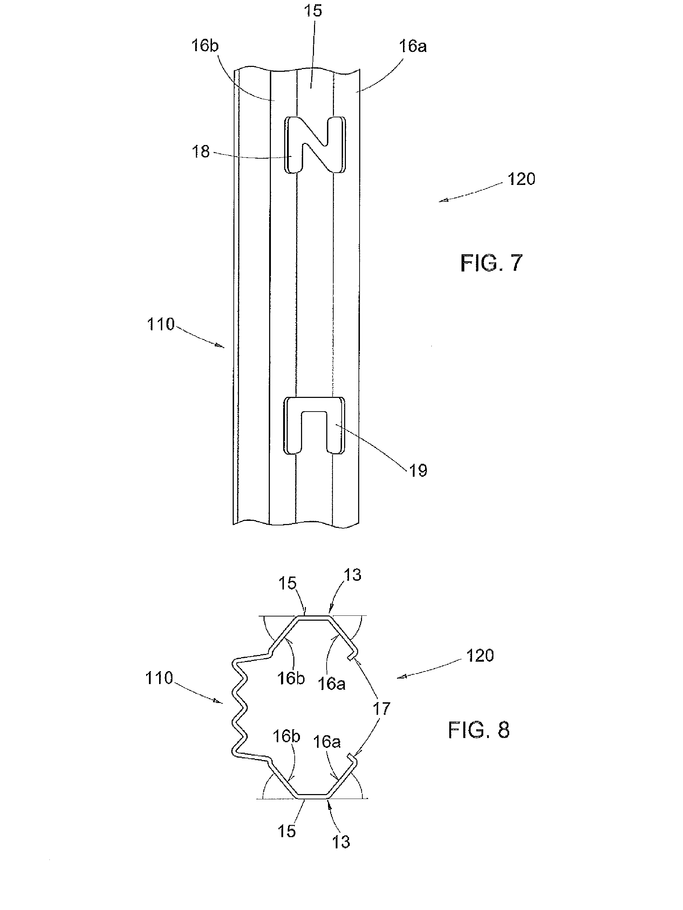

Figures 6 to 8 illustrate a post 120 of the support post assembly 10, according to one of its alternative embodiments.

The post 120 according to this embodiment differs from the post illustrated in Figures 3 to 5 due to the particular concertina configuration of the back 110.

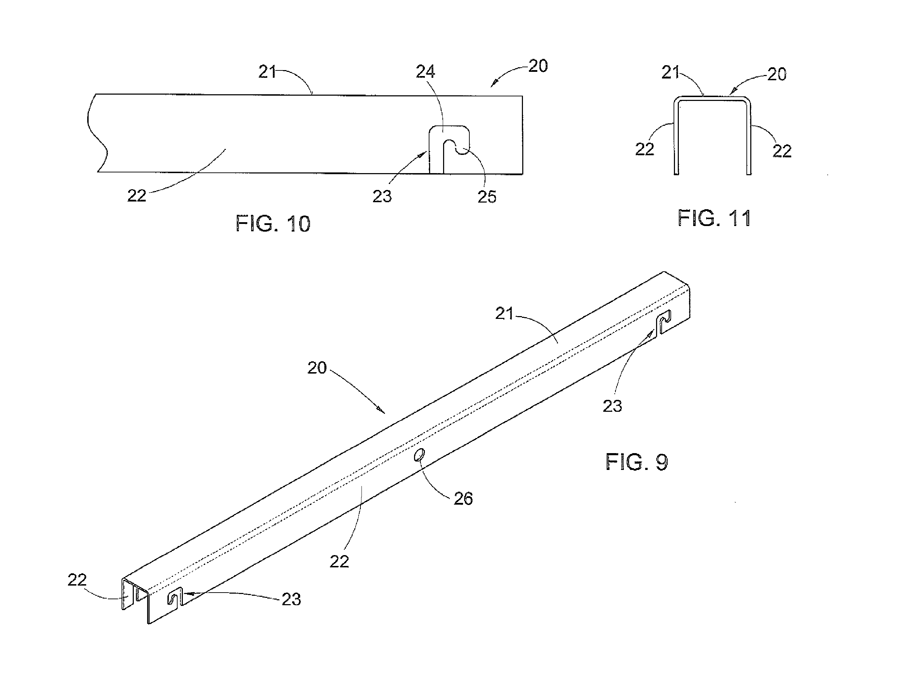

Referring now to Figures 9 to 11, each crosspiece 20 has an upside-down U shape obtained by bending of a metal sheet. Each crosspiece 20 comprises, therefore, an upper surface 21 and a pair of side walls 22, extending downwards from the upper surface 21.

Each side wall 22 has, preferably at its end portions, second coupler means 23 for a respective wire 4.

These second coupler means are preferably made up of cavities shaped like an upside-down L 23, the horizontal section 24 of the L ending with an appendage 25. The cavities 23 formed on a side wall 22 are facing the corresponding cavities 23 formed on the other side wall 22.

The side walls 22 of each crosspiece 20 have, moreover, respective central facing holes 26 for the passage of means 27, 28 (Figure 2a) for blocking the crosspiece 20 on the post 12, in a centred position in relation thereto.

In use a wire 4 is inserted, with a simple and rapid manual operation, in each cavity of the pair of facing cavities 19 with an upside-down L shape. Given the particular configuration of the cavities 19, the wire 4, once inserted in their interior, remains coupled to the crosspiece 20 in a stable manner, thereby simplifying considerably the time of installation of the support structure and the costs of management of the vineyard.

Returning to Figure 2a, in order to fix each crosspiece 20 to the respective post 12 of the support post assembly 10, the latter is made to slide through a respective pair of facing N-shaped cavities 18 of the post 12, until the holes 26 are arranged at the open side of the post 12. At this point the crosspiece 20 is blocked into position by means of known fixing means, for example a screw 27 and a nut 28.

Referring to Figures 12 and 12a, each auxiliary support post 30 is suitable for supporting the load-bearing support wire 5 and has a height of approximately 1 metre and a configuration wholly similar to that of the post 12 or 120 of the support post assembly 10.

In particular each auxiliary support post 30 is obtained by bending of a metal sheet, so as to obtain a tubular part open on one side.

Each post 30 comprises, therefore, a back portion 31, wherefrom sides 33 extend. At the sides 33, at an upper end of the post 30, at least one pair of facing cavities 18 with an N shape is formed, for coupling of the load-bearing wire 5. The back portion 31 can be corrugated or shaped like a concertina.

From what is disclosed above it is understood how, thanks to its particular configuration, the support post assembly of the invention allows rapid and resistant coupling of wires both vertically, i.e. in the direction of development of the post, and horizontally, i.e. crosswise to the post, This allows, advantageously, the creation of a containing frame for the vine shoots, or for the branches of any fruit tree, avoiding a burdensome operation of tying of the shoots, or of the branches, to the wires.

Numerous detail variations and changes can be made to the embodiment of the invention described above, within the reach of a person skilled in the art and in any case coming within the scope of the invention expressed by the annexed claims.

## Claims

1. A support post assembly (10) for agricultural applications, comprising a post (12; 120) provided with first coupler means (18) for respective wires (4, 5) and comprising, moreover, at least one crosspiece (20) fixed on said post (12; 120) and provided with second coupler means (23) for respective wires (4), **characterised in that** said at least one crosspiece (20) comprises an upper surface (21) and a pair of side walls (22) extending downwards from said upper surface (21) and **in that** said second coupler means (23) comprise cavities (23) shaped like an upside-down L and formed at end portions of said side walls (22), the cavities (23) formed on a side wall (22) facing the respective cavities (23) formed on the other side wall (22),

2. A support post assembly (10) according to claim 1, **characterised in that** said at least one crosspiece (20) has, at each side wall (22), central facing holes (26) for the passage of means (27, 28) for fixing the crosspiece (20) into position on the post (12; 120).

3. A support post assembly (10) according to any one of claims 1 and 2, **characterised in that** said post (12; 120) comprises a back portion (11; 110) and a pair of sides (13) extending from said back portion (11; 110), each side (13) ending with a lip (17).

4. A support post assembly (10) according to claim 3, **characterised in that** said back portion (11; 110) is corrugated.

5. A support post assembly (10) according to claim 3 or 4, **characterised in that** said first coupler means for wires (4, 5) comprise pairs of facing N-shaped cavities (18) formed at said sides (13) and suitably arranged along the length of the post (12; 120).

6. A support post assembly (10) according to any one of claims 3 to 5, **characterised in that** said post (12; 120) further comprises means (19) for housing and blocking into position said at least one crosspiece (20), which comprise pairs of facing cavities (19) shaped like an upside-down U and formed at said sides (13) and suitably arranged along the length of the post (12; 120).

7. A support post assembly (10) according to claim 6, when depending on claim 5, **characterised in that** said pairs of facing cavities (19) shaped like an upside-down U are alternated with said pairs of N-shaped facing cavities (18) at the upper half of said post (12).

8. A support post assembly (10) according to any one of the previous claims, **characterised in that** said post (10) and said at least one crosspiece (20) are obtained by bending a sheet of stainless steel or zinc-plated steel.

9. A support structure (100) for agricultural applications comprising a pair of head posts (2), means (3) for anchoring each head post (2) to the ground (T) and a plurality of wires (4, 5) for supporting vine shoots or branches that are germinating, **characterised in that** it comprises, between said head posts (2), at least one support post assembly (10) according to any one of claims 1 to 8, said plurality of wires (4, 5) being stretched, vertically and horizontally, between said head posts (2) and the at least one support post assembly (10), thereby forming a containing frame for the vine shoots or branches that are germinating.
